# EUROPÄISCHE PATENTSCHRIFT

(11) **EP 1 110 450 B1**
(45) Veröffentlichungstag und Bekanntmachung des Hinweises auf die Patenterteilung: **10.03.2004**
(21) Anmeldenummer: 00127279.8
(22) Anmeldetag: 19.12.2000
(51) Int. Cl.: A01M 29/00

(54) **Vogelschutzvorrichtung für einen transparenten Stoff, Glas mit Vogelschutzvorrichtung**
Device for protecting birds on a transparent material, glass with a device for protecting birds
Dispositif de protection des oiseaux pour une matière transparente, verre avec dispositif de protection des oiseaux

(30) Priorität: 20.12.1999 DE 19961506
(43) Veröffentlichungstag der Anmeldung: 27.06.2001
(73) Patentinhaber: Meyerhuber, Alfred, Dr., 91710 Gunzenhausen (DE)
(72) Erfinder: Meyerhuber, Alfred, Dr., 91710 Gunzenhausen (DE)
(74) Vertreter: Beetz & Partner Patentanwälte

(56) Entgegenhaltungen:
- CH-A- 654 065
- DE-U- 29 610 865
- US-A- 5 040 352
- US-A- 5 372 866
- US-A- 5 588 251
- US-A- 5 794 403
- DATABASE WPI Section Ch, Week 199602 Derwent Publications Ltd., London, GB; Class L01, AN 1996-015161 XP002166058 & JP 07 289142 A (ASAHI GLASS CO LTD), 7. November 1995 (1995-11-07) & JP 07 289142 A (ASAHI GLASS CO LTD) 7. November 1995 (1995-11-07)

## Beschreibung

Die Erfindung betrifft eine Vogelschutzvorrichtung sowie ein Glas mit einer Vogelschutzvorrichtung gemäß den Oberbegriffen der unabhängigen Ansprüche.

Da Vögel im Laufe der Evolution nicht gelernt haben, durchsichtigen Hindernissen auszuweichen, da es diese bis vor einigen Jahrhunderten nicht gab, passiert es häufig, daß Vögel gegen Glasscheiben fliegen, weil sie diese nicht sehen und deshalb meinen, der Durchflug durch die verglaste Öffnung sei möglich. Das Ergebnis sind verhaltensgestörte, verletzte oder gar tote Vögel und/oder zerbrochene Glasscheiben.

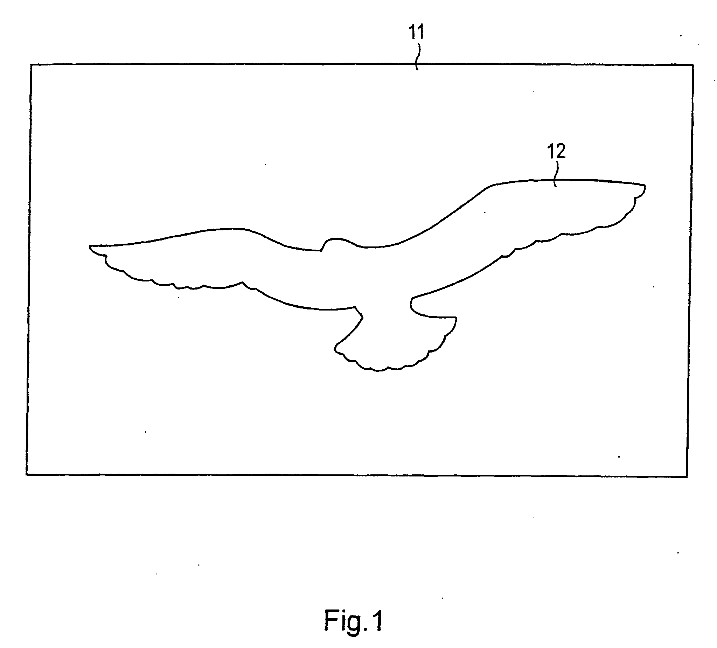

Eine Abhilfe ist es hier, verglaste Flächen mit optisch wahrnehmbaren Flächen zu bekleben. Häufig haben sie die Silhouette von Raubvögeln, um nicht nur ein Hindernis, sondern auch Gefahr darzustellen. Figur 1 zeigt dies schematisch. Auf einer Glasfläche 11 ist ein Silhouette 12 aufgeklebt. In der Regel handelt es sich um schwarze und damit undurchsichtige Folien, die von Vögeln wie von Menschen in gleicher Weise wahrgenommen werden. Nachteil dieser Lösung ist es, daß die eigentliche Funktion von Glasflächen, nämlich lichtdurchlässig zu sein, sowie der ästhetische Eindruck beeinträchtigt ist. Letzteres kann zu urheberrechtlichen Problemen im Hinblick auf die Gestaltung eines Gebäudes führen.

Aus der JP-7289142 A ist es bekannt, Glas mit einem Punktmuster zu versehen, um es sichtbar zu machen. Hiernach wird die Transparenz für Menschen beibehalten, während Vogelschlag verhindert wird.

Aufgabe der Erfindung ist es, eine Vogelschutzvorrichtung für einen transparenten Stoff zu schaffen, die die Lichtdurchlässigkeit des transparenten Stoffs weniger beeinflußt und somit auch ästhetisch neutraler ist.

Diese Aufgabe wird mit den Merkmalen der unabhängigen Ansprüche gelöst. Abhängige Ansprüche sind auf bevorzugte Ausführungsformen der Erfindung gerichtet.

Die erfindungsgemäße Vogelschutzvorrichtung ist zumindest dann, wenn sie beim oder im transparenten Stoff vorhanden bzw. angebracht ist, für zumindest eine Vogelart optisch besser wahrnehmbar als für einen Menschen. Sie kann so ausgelegt sein, daß sie für den Menschen optisch nicht oder kaum wahrnehmbar ist. Die Vorrichtung hat in einem Wellenlängenbereich, der für das menschliche Auge nicht sichtbar ist, ein höheres Absorptions- oder Reflexionsvermögen als im sichtbaren Bereich. Die Vogelschutzvorrichtung kann auch die Polarisationseigenschaften des Lichtes verändern.

Der transparente Stoff, mit dem die Vogelschutzvorrichtung zusammenwirkt, kann allgemein Glas, insbesondere Fensterglas in verschiedenen Ausführungsformen, aber auch transparenter Kunststoff sein.

Die Vogelschutzvorrichtung kann eine Folie aufweisen. Es kann sich auch um einen Zuschlagstoff handeln, der dem transparenten Stoff bei seiner Herstellung beigegeben bzw. beigemischt wird. Auch kann es sich um eine Beschichtung handeln, die auf eine oder zwischen zwei Glasscheiben aufgebracht wird. Schließlich ist es auch möglich, die Vogelschutzvorrichtung als einen Bereich vorzugsweise auf der Oberfläche des transparenten Stoffs auszubilden, der mechanisch oder physikalisch oder chemisch bearbeitet wurde.

Die Vogelschutzvorrichtung kann flächenfüllend oder bestimmten Mustern folgend vorgesehen sein.

Bezugnehmend auf die Zeichnungen werden nachfolgend einzelne Ausführungsformen der Erfindung beschrieben, es zeigen:
Fig. 1 eine bekannte Vogelschutzvorrichtung,
Fig. 2 verschiedene Ausführungsformen von Gläsern mit der Vogelschutzvorrichtung, und
Fig. 3 ein Absorptionsspektrum einer erfindungsgemäßen Vogelschutzvorrichtung.

Die Erfindung nutzt die Tatsache, daß viele Vögel einen anderen und insbesondere weiteren Wellenlängenbereich haben, den sie wahrnehmen können oder daß manche von ihnen auch polarisiertes Licht erkennen können. Für den Menschen liegen sichtbare Wellenlängen etwa im Bereich zwischen 400 und 800 nm. Langwelligeres Licht wird allenfalls wegen der Wärmeentwicklung als Infrarotstrahlung wahrgenommen (Wellenlänge > 800 nm), während Wellenlängen unter 400 nm nicht bzw. nur über den Sonnenbrand, den sie verursachen, zeitverzögert wahrgenommen werden. Die meisten Vögel sehen dagegen zumindest auch ultraviolettes Licht, z.B. Wellenlängen bis 360 nm und kürzer. So kann eine Ausführungsform der Vogelschutzvorrichtung so beschaffen sein, daß sie einen (für das menschliche Auge) durchsichtigen Stoff aufweist, der jedoch im (für Vögel ebenfalls sichtbaren) UV-Bereich eine markante Absorptionslinie hat. Eine entsprechend präparierte Glasscheibe wird damit für Vögel anders als durchsichtig erscheinen und damit als Hindernis erkennbar werden.

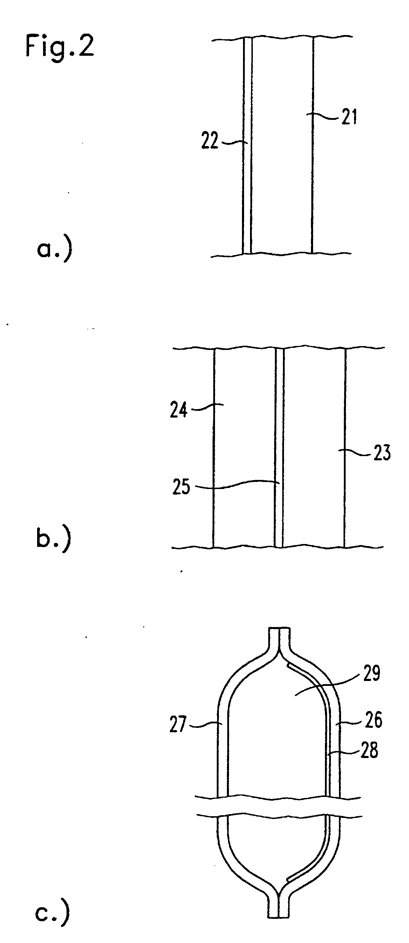

Die Fig. 2 zeigt verschiedene Ausführungsformen, bei denen die Vogelschutzvorrichtung mehr oder minder getrennt vom eigentlichen Glas vorgesehen ist. Fig. 2a zeigt eine Ausführungsform, bei der eine Folie 22 auf eine Glasscheibe 21 aufgebracht ist. Die Folie 22 hat optische Eigenschaften dahingehend, daß sie für zumindest eine Vogelart optisch besser wahrgenommen werden kann als für einen Menschen. Für einen Menschen erscheint sie im wesentlichen transparent, so daß auch das mit ihr beklebte Glas im wesentlichen transparent erscheint. Die Folie kann aber so ausgelegt sein, daß sie beispielsweise in einem für Menschen nicht wahrnehmbaren Wellenlängenbereich eine markante Absorptionslinie hat.

Fig. 2b zeigt ein Verbundglas, das eine erste Lage 23 und eine zweite Lage 24 aufweist. Zwischen den Lagen ist eine Vogelschutzvorrichtung 25 vorgesehen. Es kann sich abermals um eine Folie handeln oder um eine Bedampfung oder auch um eine bestimmte Behandlung einer Oberfläche einer der Lagen 23, 24.

Fig. 2c zeigt Isolarglas mit zwei Glasscheiben 26, 27 und einem mehr oder minder stark evakuierten Raum 29 zwischen ihnen. Auf der Innenseite einer der Glasscheiben kann die Vogelschutzvorrichtung 28 vorgesehen sein, auch hier wieder beispielsweise als Folie oder als Beschichtung. Eine Beschichtung kann beispielsweise durch Aufdampfen oder Abscheidung aufgebracht werden. Es können auch photographische oder photolithographische Verfahren verwendet werden.

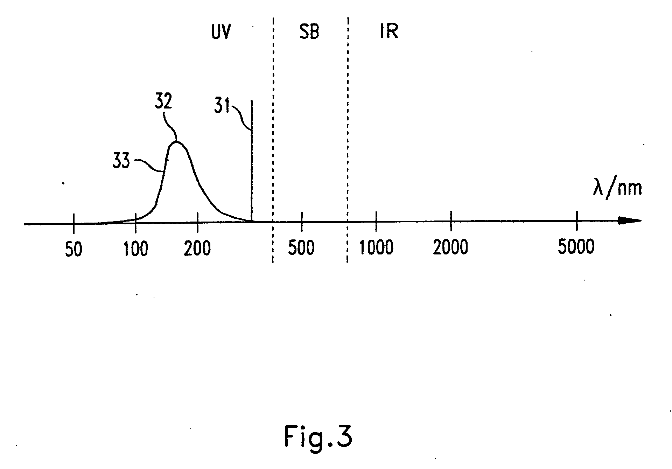

Die Vogelschutzvorrichtung kann auch ein Zuschlagstoff sein, der beispielsweise bei der Herstellung des transparenten Stoffs diesem beigemengt wird. Es kann sich beispielsweise um einen Stoff handeln, der dem Glas beigemengt diesem eine Absorptionslinie entsprechend Fig. 3 verleiht. Ähnliche Möglichkeiten gibt es, wenn der transparente Stoff ein Kunststoff ist.

Fig. 3 zeigt schematisch eine Eigenschaft einer erfindungsgemäßen Vogelschutzvorrichtung. Dargestellt ist das Absorptionsverhalten der Vogelschutzvorrichtung im angewandten Zustand. Die Wellenlänge ist auf einer logarithmischen Skala dargestellt. Der sichtbare Bereich SB liegt etwa zwischen 400 und 800 nm. Darüber liegt der Infrarotbereich (IR), darunter der ultraviolette Bereich (UV). Die Vogelschutzvorrichtung kann eine Absorptionslinie 31 oder ein Absorptionsmaximum (Maximum 32 der Kurve 33) im Wellenlängenbereich zwischen 50 und 450 nm haben. Solche Absorptionsbereiche schwächen den Durchtritt von Licht im entsprechenden Wellenlängenbereich, so daß die so behandelte Glasscheibe für Vögel dunkler erscheint und damit sichtbar wird. Vorzugsweise liegt die Absorptionslinie und/oder das Absorptionsmaximum im Wellenlängenbereich zwischen 420 und 200 nm, weiter vorzugsweise zwischen 420 und 360 nm.

Die Vogelschutzvorrichtung kann auch mehrere Absorptionslinien 31 oder Absorptionsmaxima 32 wie oben angegeben haben, wobei diese dann auf unterschiedlichen Wellenlängen in den obengenannten Bereichen liegen können. Soweit sinnvoll, können Absorptionslinien oder Absorptionsmaxima auch im Infrarotbereich liegen, dort z.B. im Wellenlängenbereich zwischen 750 und 3000 nm, vorzugsweise zwischen 780 nm und 1500 nm.

Die erweiterte Wellenlängensichtigkeit von Vögeln kann auch durch wellenlängenselektive Polarisatoren nutzbar gemacht werden. Beispielsweise können mittels gekreuzter Polarisatoren, die bei einer bestimmten Wellenlänge (beispielsweise im ultravioletten Bereich entsprechend Linie 31) liegen, bestimmte Wellenlängen fast vollständig herausgefiltert werden, so daß sich die gleichen Effekte wie oben ergeben.

Die Vogelschutzvorrichtung kann flächig oder einem bestimmten Muster folgend auf dem transparenten Stoff aufgebracht sein. Sofern ein Muster vorgesehen ist, kann es abermals die Silhouette eines Raubvogels sein. Es kann sich auch um andere Muster handeln, beispielsweise um Streifen, Gitter, Punkte oder ähnliches. Bei solchen Ausführungsformen wären dann diese Muster für zumindest eine Vogelart optisch besser wahrnehmbar als für einen Menschen. Insbesondere wären sie für Menschen nicht oder kaum wahrnehmbar.

Sofern von der Wahrnehmbarkeit durch Vögel oder Menschen gesprochen wird, kann auf Durchschnittswerte abgehoben werden. Sofern eine Vogelschutzvorrichtung als optisch nicht wahrnehmbar beschrieben ist, kann damit eine Intensitätsminderung im sichtbaren Bereich von weniger als 5 %, vorzugsweise weniger als 1 % gemeint sein. Sofern von einer kaum wahrnehmbaren Vogelschutzvorrichtung die Rede ist, kann damit eine Intensitätsminderung im sichtbaren Bereich von weniger als 20 %, vorzugsweise weniger als 10 % gemeint sein. Der sichtbare Bereich kann hier als von 400 nm bis 800 nm reichend angesehen werden.

Soweit Wahrnehmbarkeit, Absorptions- und/oder Reflexionsvermögen insbesondere in unterschiedlichen Wellenlängenbereichen genannt oder miteinander verglichen werden, kann hierbei auf die jeweilige Eigenschaft an einer Wellenlänge in diesem Bereich und/oder gemittelt über den Bereich, insbesondere einen der obengenannten, Bezug genommen werden. Im sichtbaren Bereich kann hierfür ein Teilbereich von beispielsweise 400 nm bis 600 nm oder 400 nm bis 500 nm herangezogen werden. Vorzugsweise werden bei der Betrachtung von Absorptions- und Reflexionsvermögen Relativwerte (z.B. %, dB) herangezogen.

Soweit die Vogelschutzvorrichtung eine Folie aufweist, kann diese als Klebefolie ausgelegt sein. Sie kann nur bereichsweise die genannten optischen Eigenschaften (für zumindest eine Vogelart optisch besser wahrnehmbar als für einen Menschen) haben, oder die Folie selbst kann entsprechend gewünschten Mustern geschnitten sein.

## Patentansprüche

1. Vogelschutzvorrichtung für einen transparenten Stoff,
**dadurch gekennzeichnet, daß**
die Vogelschutzvorrichtung eine Einrichtung oder Beimengung ist oder aufweist, die dann, wenn sie beim oder im transparenten Stoff vorhanden ist, in einem Wellenlängenbereich, der an den für Menschen sichtbaren Wellenlängenbereich angrenzt, ein höheres Absorptions- und/oder Reflexionsvermögen hat als im sichtbaren Bereich.

2. Vorrichtung nach Anspruch 1, **dadurch gekennzeichnet, daß** sie dann, wenn sie beim oder im transparenten Stoff vorhanden ist, die Polarisation des Lichtes verändert.

3. Vorrichtung nach Anspruch 1 oder 2, **dadurch gekennzeichnet, daß** sie dann, wenn sie beim oder im transparenten Stoff vorhanden ist, in einem Wellenlängenbereich, der an den für Menschen sichtbaren Wellenlängenbereich angrenzt, ein anderes Polarisationsvermögen hat als im sichtbaren Bereich.

4. Vorrichtung nach einem der vorherigen Ansprüche, **dadurch gekennzeichnet, daß** der transparente Stoff ein Glas ist.

5. Vorrichtung nach einem der Ansprüche 1 bis 3, **dadurch gekennzeichnet, daß** der transparente Stoff ein Kunststoff ist.

6. Vorrichtung nach einem der Ansprüche 1 bis 5, **dadurch gekennzeichnet, daß** sie eine Folie aufweist.

7. Vorrichtung nach einem der Ansprüche 1 bis 5, **dadurch gekennzeichnet, daß** sie ein Zuschlagstoff ist, der dem transparenten Stoff bei seiner Herstellung beigegeben werden kann.

8. Vorrichtung nach einem der Ansprüche 1 bis 5, **dadurch gekennzeichnet, daß** sie eine Beschichtung ist, die auf den transparenten Stoff aufgebracht werden kann.

9. Vorrichtung nach einem der Ansprüche 1 bis 5, **dadurch gekennzeichnet, daß** sie einen Bereich vorzugsweise auf der Oberfläche des transparenten Stoffes aufweist, der mechanisch oder physikalisch oder chemisch bearbeitet wurde.

10. Vorrichtung nach einem der vorherigen Ansprüche, **dadurch gekennzeichnet, daß** sie beim oder im transparenten Stoff einem bestimmten Muster folgend vorgesehen wird.

11. Vorrichtung nach einem der Ansprüche 1 bis 9, **dadurch gekennzeichnet, daß** sie beim oder im transparenten Stoff flächig vorgesehen wird.

12. Glas mit einer Vogelschutzvorrichtung nach einem der vorherigen Ansprüche.

13. Glas nach Anspruch 12, das als Flachglas ausgebildet ist, **dadurch gekennzeichnet, daß** die Vogelschutzvorrichtung auf einer Oberfläche des Flachglases ausgebildet oder angebracht ist.

14. Glas nach Anspruch 12 oder 13, bei dem es sich um eine mehrlagige Glasscheibe, insbesondere um Verbundglas handelt, **dadurch gekennzeichnet, daß** die Vogelschutzvorrichtung zwischen zwei Lagen vorgesehen ist.

## Claims

1. Bird protection device for a transparent material, **characterised in that** the bird protection device is or comprises a device or mixture which, when provided on or in the transparent material, has a higher absorption capacity and/or reflection capacity in a wavelength range adjacent to the wavelength range visible to humans than in the visible range.

2. Device as claimed in claim 1, **characterised in that** when the device is provided on or in the transparent material it changes the polarisation of the light.

3. Device as claimed in claims 1 or 2, **characterised in that** when the device is provided on or in the transparent material, it has a different polarisation capacity in a wavelength range adjacent to the wavelength range visible to humans than in the visible range.

4. Device as claimed in any one of the preceding claims, **characterised in that** the transparent material is glass.

5. Device as claimed in any one of claims 1 to 3, **characterised in that** the transparent material is a synthetic material.

6. Device as claimed in any one of claims 1 to 5, **characterised in that** it comprises a sheet.

7. Device as claimed in any one of claims 1 to 5, **characterised in that** it is a loading material which can be added to the transparent material during production thereof.

8. Device as claimed in any one of claims 1 to 5, **characterised in that** it is a coating which can be applied to the transparent material.

9. Device as claimed in any one of claims 1 to 5, **characterised in that** it comprises a region preferably on the surface of the transparent material which has been processed mechanically or physically or chemically.

10. Device as claimed in any one of the preceding claims, **characterised in that** it is provided on or in the transparent material according to a specific pattern.

11. Device as claimed in any one of claims 1 to 9, **characterised in that** it is provided in a two-dimensional manner on or in the transparent material.

12. Glass comprising a bird protection device as claimed in any one of the preceding claims.

13. Glass as claimed in claim 12, which is formed as flat glass, **characterised in that** the bird protection device is formed or applied on a surface of the flat glass.

14. Glass as claimed in claim 12 or 13, wherein the glass is a multiple-layered glass pane, in particular compound glass, **characterised in that** the bird protection device is provided between two layers.

## Revendications

1. Dispositif de protection des oiseaux pour une matière transparente, **caractérisé en ce que** le dispositif de protection des oiseaux est, ou présente un équipement ou un support de matière active ayant un pouvoir d'absorption et/ou de réflexion supérieur à celui de la plage visible quand il est présent sur ou dans la matière transparente, dans une plage de longueurs d'ondes contiguë à la plage de longueur d'ondes visible pour l'être humain.

2. Dispositif selon la revendication 1, **caractérisé en ce qu'**il change la polarité de la lumière quand il est présent sur ou dans la matière transparente.

3. Dispositif selon la revendication 1 ou 2, **caractérisé en ce qu'**il a un pouvoir polarisateur différent de celui de la plage visible quand il est présent sur ou dans la matière transparente, dans une plage de longueurs d'ondes contiguë à la plage de longueur d'ondes visible pour l'être humain.

4. Dispositif selon l'une des revendications précédentes, **caractérisé en ce que** la matière transparente est un verre.

5. Dispositif selon l'une des revendications 1 à 3, **caractérisé en ce que** la matière transparente est un plastique.

6. Dispositif selon l'une des revendications 1 à 5, **caractérisé en ce qu'**il présente un tain.

7. Dispositif selon l'une des revendications 1 à 5, **caractérisé en ce qu'**il est une matière additionnelle pouvant être incorporée à la matière transparente lors de sa fabrication.

8. Dispositif selon l'une des revendications 1 à 5, **caractérisé en ce qu'**il est un revêtement pouvant être appliqué sur la matière transparente.

9. Dispositif selon l'une des revendications 1 à 5, **caractérisé en ce qu'**il présente une zone traitée mécaniquement, physiquement ou chimiquement, de préférence à la surface de la matière transparente.

10. Dispositif selon l'une des revendications précédentes, **caractérisé en ce qu'**il est prévu respecter un motif défini sur ou dans la matière transparente.

11. Dispositif selon l'une des revendications 1 à 9, **caractérisé en ce qu'**il est prévu en nappe sur ou dans la matière transparente.

12. Verre avec un dispositif de protection des oiseaux selon l'une des revendications précédentes.

13. Verre selon la revendication 12, formé en tant que verre plat, **caractérisé en ce que** le dispositif de protection des oiseaux est formé ou appliqué sur une surface du verre plat.

14. Verre selon la revendication 12 ou 13, s'agissant d'une vitre à plusieurs strates, notamment de verre feuilleté, **caractérisé en ce que** le dispositif de protection des oiseaux est prévu entre deux strates.
